# EUROPÄISCHE PATENTANMELDUNG

(11) **EP 4 501 939 A1**
(43) Veröffentlichungstag der Anmeldung: **05.02.2025**
(21) Anmeldenummer: 23189217.5
(22) Anmeldetag: 02.08.2023
(51) Int. Cl.: C07F 9/58

(54) **FLUOROLIGANDEN UND CHLOROLIGANDEN UND DEREN EINSATZ IN DER ALKOXYCARBONYLIERUNG**

(71) Anmelder: Evonik Oxeno GmbH & Co. KG, 45772 Marl (DE)
(72) Erfinder: Die Erfindernennung liegt noch nicht vor
(74) Vertreter: Evonik Patent Association

(57) **Zusammenfassung**

Fluoroliganden und Chloroliganden und deren Einsatz in der Alkoxycarbonylierung.

## Beschreibung

Die Erfindung betrifft Fluoroliganden und Chloroliganden und deren Einsatz in der Alkoxycarbonylierung.

Die Alkoxycarbonylierung ethylenisch ungesättigter Verbindungen ist ein Prozess mit steigender Bedeutung. Unter einer Alkoxycarbonylierung versteht man die Umsetzung ethylenisch ungesättigter Verbindungen (Olefinen) mit Kohlenmonoxid und Alkoholen in Gegenwart eines Metall-Ligand-Komplexes zu den entsprechenden Estern. Üblicherweise wird als Metall Palladium eingesetzt. Das folgende Schema zeigt die allgemeine Reaktionsgleichung einer Alkoxycarbonylierung:

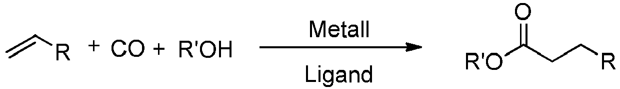

Die technische Aufgabe der Erfindung ist die Bereitstellung eines neuen Liganden / Verfahrens, mit welchem die Ausbeute gesteigert werden kann.

Die Aufgabe wird gelöst durch eine Verbindung nach Anspruch 1.

Verbindung gemäß Formel (**I**): 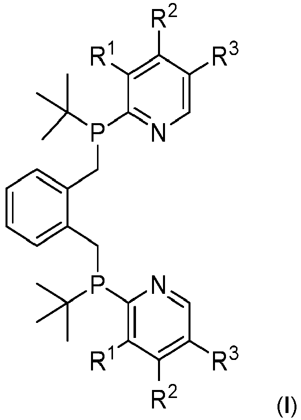 wobei einer der drei Reste R¹, R², R³ für -F oder -CI steht, und die beiden anderen Reste für -H stehen.

In einer Ausführungsform steht einer der drei Reste R¹, R², R³ für-F, und die beiden anderen Reste stehen für -H.

In einer Ausführungsform weist die Verbindung die Struktur (1) auf:

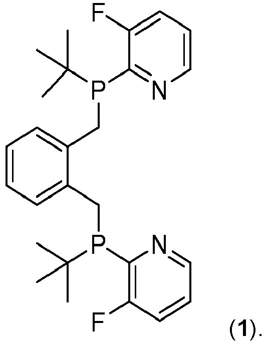

In einer Ausführungsform weist die Verbindung die Struktur (2) auf:

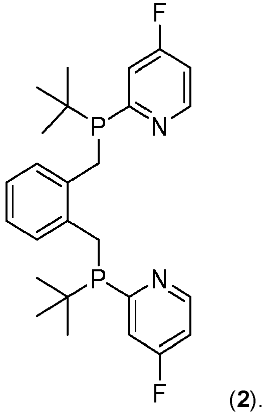

In einer Ausführungsform weist die Verbindung die Struktur (3) auf: 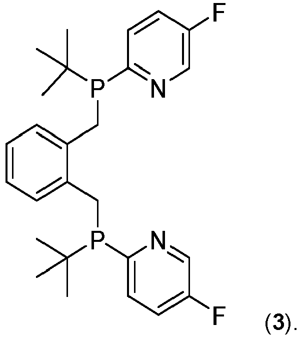 Neben den Verbindungen an sich, wird auch ein Verfahren beansprucht, in welchem die Verbindungen zum Einsatz kommen.

Verfahren umfassend die Verfahrensschritte:
a) Vorlegen einer ethylenisch ungesättigten Verbindung;
b) Zugabe einer zuvor beschriebenen Verbindung gemäß Formel (**I**);
c) Zugabe einer Pd-Verbindung;
d) Zugabe eines Co-Katalysators ausgewählt aus: Aluminiumtriflat, H₂SO₄, MSA, pTSA, TFA;
e) Zugabe eines Alkohols;
f) Zuführen von CO;
g) Erwärmen des Reaktionsgemisches aus a) bis f), wobei die ethylenisch ungesättigte Verbindung zu einem Ester umgesetzt wird.

Hierbei kann die Zugabe der Stoffe in beliebiger Reihenfolge erfolgen. Üblicherweise erfolgt die Zugabe von CO jedoch, nachdem die Reaktionspartner in den Schritten a) bis e) vorgelegt wurden. Darüber hinaus kann CO auch in mehreren Schritten zugeführt werden, so dass beispielsweise zunächst ein Teil des CO zugeführt, dann erwärmt und anschließend ein weiterer Teil CO zugeführt wird.

In einer Variante des Verfahrens ist die Pd-Verbindung ausgewählt aus: Palladiumdichlorid, Palladium(II)-acetylacetonat, Palladium(II)-acetat, Dichloro(1,5-cyclooctadiene)palladium(II), Bis(dibenzylideneaceton)palladium, Bis(acetonitrile)dichloropalladium(II), Palladium(cinnamyl)dichlorid.

In einer Variante des Verfahrens ist die Pd-Verbindung ausgewählt aus: Pd(dba)₂, Pd(acac)₂ oder Pd(OAc)₂.

In einer Variante des Verfahrens ist die Pd-Verbindung Pd(acac)₂.

In einer Variante des Verfahrens ist der Alkohol in Verfahrensschritt e) ausgewählt aus: Methanol, Ethanol, 1-Propanol, 1-Butanol, 1-Pentanol, 1-Hexanol, 2-Propanol, tert-Butanol, 3-Pentanol, Cyclohexanol, Phenol, oder Mischungen davon.

In einer Variante des Verfahrens ist der Alkohol in Verfahrensschritt e) Methanol.

In einer Variante des Verfahrens wird der Alkohol im Verfahrensschritt e) im Überschuss eingesetzt.

In einer Variante des Verfahrens wird der Alkohol im Verfahrensschritt e) gleichzeitig als Lösungsmittel eingesetzt.

In einer Variante des Verfahrens wird CO in Verfahrensschritt f) bei einem CO-Partialdruck im Bereich von 1 MPa (10 bar) bis 5 MPa (50 bar) zugeführt wird.

In einer Variante des Verfahrens wird CO in Verfahrensschritt f) bei einem CO-Partialdruck im Bereich von 1 MPa (10 bar) bis 4 MPa (40 bar) zugeführt wird.

In einer Variante des Verfahrens wird das Reaktionsgemisch in Verfahrensschritt g) auf eine Temperatur im Bereich von 40 °C bis 140 °C erwärmt.

In einer Variante des Verfahrens wird das Reaktionsgemisch in Verfahrensschritt g) auf eine Temperatur im Bereich von 80 °C bis 140 °C erwärmt.

In einer Variante des Verfahrens wird als ethylenisch ungesättigten Verbindung ein Gemisch aus 2,4,4-Trimethylpent-1-en (TMP1) und 2,4,4-Trimethylpent-2-en (TMP2) eingesetzt.

In einer Variante des Verfahrens wird als ethylenisch ungesättigten Verbindung 2,3-Dimethyl-2-buten eingesetzt.

In einer Variante des Verfahrens ist der Co-Katalysators Aluminiumtriflat.

Im Folgenden soll die Erfindung anhand von Ausführungsbeispielen näher erläutert werden.

### Allgemeine Arbeitsvorschriften

Es wird unter Argon Atmosphäre gearbeitet. Reaktionsgefäße sind zuvor unter Einwirkung von Temperatur (80 °C) und Ölpumpenvakuum getrocknet worden. Flüssige Substanzen werden für mind. 15 Minuten durch einperlen von Argon entgast. Als Säure kommt Aluminiumtrifluoromethansulfonsäure (Al(OTf)₃) zum Einsatz. Als Liganden werden (1), (2), (3) und als Vergleichsligand (4) eingesetzt. Als Präkursor wird Palladium(II)bis(acetylacetonate) (Pd(acac)₂) eingesetzt. Als Substrat wird Di-iso-buten, als Gemisch aus den beiden C8-Isomeren 2,4,4-Trimethylpent-1-en (TMP1) und 2,4,4-Trimethylpent-2-en (TMP2) im Verhältnis von 79:21 eingesetzt und in einer zweiten Versuchsreihe 2,3-Dimethyl-2-buten verwendet.

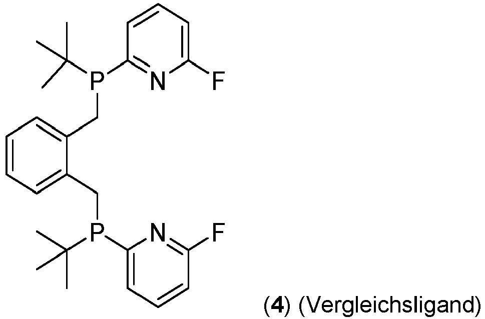

### Präkursorstammlösung:

In einem 20 mL Vial wird Pd(acac)₂ (10 mg, 33 µmol) eingewogen, luftdicht mittels eines gebördelten Septums verschlossen und in Methanol gelöst (10 mL).

Die Reaktion wird in 20 mL Glasgefäßen mit Magnetrührfischen durchgeführt. Zunächst werden Al(OTf)₃ (0.8 mol%) und der Ligand (0.2 mol%) in dem Glasgefäß eingewogen und daraufhin luftdicht mittels eines gebördelten Septums verschlossen. Mittels durchstochener Kanüle, welche an eine Argonverteilerstation angeschlossen ist, wird in den folgenden Schritten eine Argonatmosphäre garantiert und besteht gleichzeitig die Möglichkeit des Druckausgleichs (Zugabe Lösungen). Die benötigte Menge an Präkursorstammlösung (1,5 mL) wird mittels µL-Spritze zugegeben, sodass sich eine Einwaage von Pd(acac)₂ (0,05 mol%) ergibt. Abschließend wird Methanol mittels µL-Spritze hinzugegeben, damit ein Gesamtvolumen von 8,4 mL vorliegt. Der Autoklav wird verschlossen, dreimal mit Stickstoff gespült und mit 20 bar Stickstoff auf die Dichte überprüft. Nach Feststellung der Dichte erfolgt das gleiche Vorgehen mit CO. Die Reaktionslösungen werden dann auf die benötigte Temperatur von 120 °C erhitzt. Nach 20 Minuten bei konstanter Temperatur wird das Substrat mittels HPLC-Pumpe in die Reaktionsgefäße überführt. Nach 15 min bzw. 4 h wird über die Substratleitung jeweils eine Probe gezogen.

### Umsetzung des Substrates Di-iso-buten (DiB)

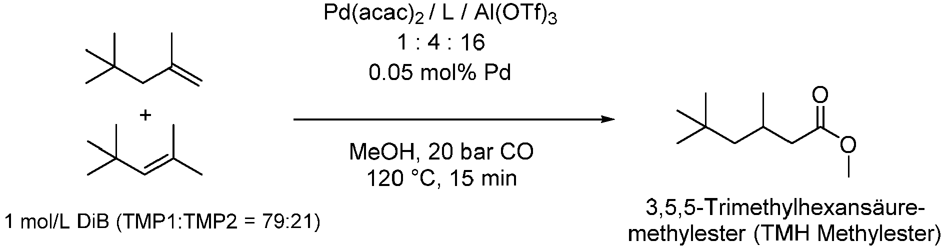

Die jeweiligen Ausbeuten des Esters sind in der nachfolgenden Tabelle aufgelistet:

| Ligand | Ausbeute [%] |
|---|---|
| (**1**)* | 36 |
| (**2**)* | 34 |
| (**3**)* | 37 |
| (**4**) | 12 |

| | |
|---|---|
| * erfindungsgemäßes Ausführungsbeispiel | |

*Umsetzung des Substrates 2,3-Dimethyl-2-buten (TME)*

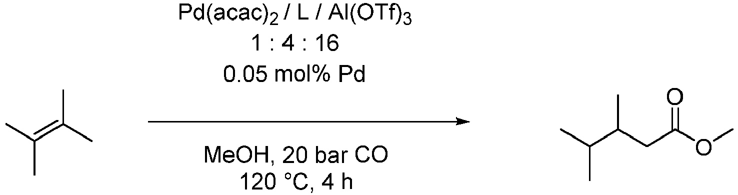

Die jeweiligen Ausbeuten des Esters sind in der nachfolgenden Tabelle aufgelistet:

| Ligand | Ausbeute [%] |
|---|---|
| (**1**)* | 45 |
| (**2**)* | 41 |
| (**3**)* | 48 |
| (**4**) | 2 |

| | |
|---|---|
| * erfindungsgemäßes Ausführungsbeispiel | |

Die durchgeführten Versuche belegen, dass die gestellte Aufgabe durch eine erfindungsgemäße Verbindung gelöst wird.

## Patentansprüche

1. Verbindung gemäß Formel (**I**): 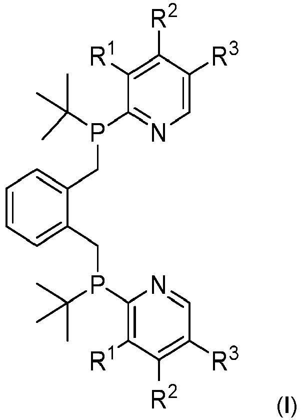 wobei einer der drei Reste R¹, R², R³ für -F oder -CI steht, und die beiden anderen Reste für -H stehen.

2. Verbindung nach Anspruch 1,
wobei einer der drei Reste R¹, R², R³ für -F steht, und die beiden anderen Reste für -H stehen.

3. Verbindung nach einem der Ansprüche 1 oder 2,
wobei die Verbindung die Struktur (1) aufweist:

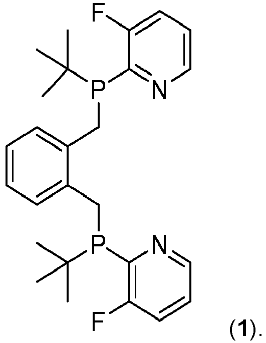

4. Verbindung nach einem der Ansprüche 1 oder 2,
wobei die Verbindung die Struktur (2) aufweist:

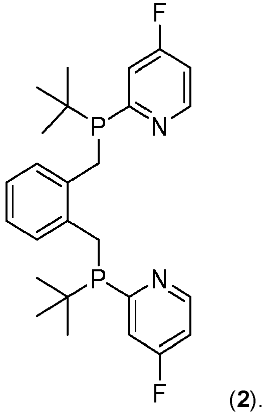

5. Verbindung nach einem der Ansprüche 1 oder 2,
wobei die Verbindung die Struktur (3) aufweist:

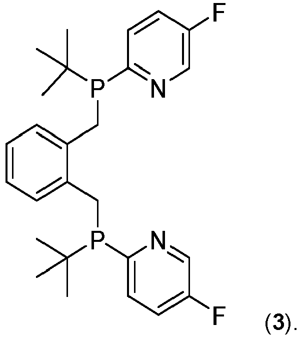

6. Verfahren umfassend die Verfahrensschritte:
a) Vorlegen einer ethylenisch ungesättigten Verbindung;
b) Zugabe einer Verbindung nach einem der Ansprüche 1 bis 5;
c) Zugabe einer Pd-Verbindung;
d) Zugabe eines Co-Katalysators ausgewählt aus: Aluminiumtriflat, H₂SO₄, MSA, pTSA, TFA;
e) Zugabe eines Alkohols;
f) Zuführen von CO;
g) Erwärmen des Reaktionsgemisches aus a) bis f), wobei die ethylenisch ungesättigte Verbindung zu einem Ester umgesetzt wird.

7. Verfahren nach Anspruch 6,
wobei die Pd-Verbindung ausgewählt ist aus: Palladiumdichlorid, Palladium(II)-acetylacetonat, Palladium(II)-acetat, Dichloro(1,5-cyclooctadiene)palladium(II), Bis(dibenzylideneaceton)palladium, Bis(acetonitrile)dichloropalladium(II), Palladium(cinnamyl)dichlorid.

8. Verfahren nach einem der Ansprüche 6 oder 7,
wobei der Alkohol in Verfahrensschritt e) ausgewählt ist aus: Methanol, Ethanol, 1-Propanol, 1-Butanol, 1-Pentanol, 1-Hexanol, 2-Propanol, tert-Butanol, 3-Pentanol, Cyclohexanol, Phenol, oder Mischungen davon.

9. Verfahren nach einem der Ansprüche 6 bis 8,
wobei der Alkohol in Verfahrensschritt e) Methanol ist.

10. Verfahren nach einem der Ansprüche 6 bis 9,
wobei CO wird in Verfahrensschritt f) bei einem CO-Partialdruck im Bereich von 1 MPa (10 bar) bis 5 MPa (50 bar) zugeführt wird.

11. Verfahren nach einem der Ansprüche 6 bis 10,
wobei das Reaktionsgemisch in Verfahrensschritt g) auf eine Temperatur im Bereich von 40 °C bis 140 °C erwärmt wird.

12. Verfahren nach einem der Ansprüche 6 bis 11,
wobei als ethylenisch ungesättigten Verbindung ein Gemisch aus 2,4,4-Trimethylpent-1-en (TMP1) und 2,4,4-Trimethylpent-2-en (TMP2) eingesetzt wird.

13. Verfahren nach einem der Ansprüche 6 bis 11,
wobei als ethylenisch ungesättigten Verbindung 2,3-Dimethyl-2-buten eingesetzt wird.

14. Verfahren nach einem der Ansprüche 6 bis 13,
wobei der Co-Katalysators Aluminiumtriflat ist.
